(19) Europäisches Patentamt / European Patent Office / Office européen des brevets

(11) **EP 4 152 124 A1**

(12) **EUROPEAN PATENT APPLICATION**

(43) Date of publication:
**22.03.2023 Bulletin 2023/12**

(21) Application number: **21197574.3**

(22) Date of filing: **17.09.2021**

(51) International Patent Classification (IPC):
**G06F 1/20** (2006.01)  **G06F 1/3206** (2019.01)
**G06F 1/324** (2019.01)  **G06F 1/3296** (2019.01)

(52) Cooperative Patent Classification (CPC):
**G06F 1/206; G06F 1/3206; G06F 1/324; G06F 1/3296**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Universiteit van Amsterdam 1012 WX Amsterdam (NL)**

(72) Inventors:
• **Niknam, Sobhan**
  **1012 WX Amsterdam (NL)**
• **Pathania, Anuj**
  **1012 WX Amsterdam (NL)**
• **Pimentel, Andrew David**
  **1012 WX Amsterdam (NL)**

(74) Representative: **De Vries & Metman Overschiestraat 180 1062 XK Amsterdam (NL)**

(54) **POWER BUDGETING FOR A PROCESSOR WITH MULTIPLE CORES**

(57)    Methods and systems are disclosed for determining a power budget for processor cores of a multi-core processor. The method may comprise determining or receiving a threshold temperature for each processor core of the plurality of processor cores, determining or receiving a current temperature for each processor core of the plurality of processor cores, and determining a power budget for one or more processor cores of the plurality of processor cores based on the current temperatures, the threshold temperatures, and a thermal model of the processor. Preferably, the thermal model comprises a mathematical representation of heat generation and heat flow in the processor. In an embodiment, the method may further comprise determining or receiving the thermal model.

FIG. 2

**Description**

Field of the invention

The disclosure relates to power budgeting for multi-core processors, and, in particular, though not exclusively, to methods and systems for determining a power budget for a multi-core processor, and to a computer program product enabling a computer system to perform such methods.

Background of the invention

Technology advancements have led to a steady increase in transistor density in chips, enabling integration of more and more processor cores within a single processor. Such processors with multiple processor cores are known as multi-core processors or many-core processors. These processors are especially suitable for multi-threaded applications whose performance enhances through parallel processing. However, over the last few years, on-chip power density has increased dramatically with the increase of transistor density (a phenomenon known as the breakdown of Dennard scaling).

This increase in power density leads to overheating risks. Thermal hotspots can emerge in the processor even when only some of the available cores operate near their full potential. These hotspots can threaten the safety and reliability of the processor, and thus of the system deploying the processor. Therefore, to ensure a thermally safe operation of the system, the power consumption of the active cores is typically constrained using power budgets. In an optimal case, the power budget for a core equals the maximum power that it can dissipate with the help of the accompanying cooling solution, typically comprising a heat spreader, a heat sink, a cooling fan, etc. This (maximal) power budget is not determined just by a core's activity but also by the activities of other cores.

However, the maximum amount of power a processor core can dissipate without overheating is typically not known. Therefore, to prevent any thermal violation, processors typically come with Dynamic Thermal Management (DTM). DTM is triggered when the processor (or a part of it) heats up above a threshold temperature. DTM can control the temperature by various means, such as powering down the cores, gating their clocks, reducing their supply voltage and frequency, boosting the fan speed, etc. In extreme cases, DTM may shut down the entire processor, leading to system failure. Thus, although DTM ensures the thermally safe operation of a processor, it may lead to substantial degradation in the performance of the processor by reducing the power of cores for which there is no imminent risk of overheating. Therefore, for systems deployed in thermally constrained environments, performance may be improved by power budgeting techniques which aim to increase the power available to the processor whilst avoiding triggering DTM.

A commonly used power budgeting technique is manufacturer-provided Thermal Design Power (TDP). TDP is a single and constant chip-level power budget that the manufacturer derives at the time of design. Therefore, TDP is unaware of the number and spatial alignment of active cores. Consequently, TDP is often either too pessimistic, causing the processor to perform below maximum capacity, or too optimistic, leading to frequent triggering of DTM.

S. Pagani et al, "TSP: Thermal safe power: Efficient power budgeting for many-core systems in dark silicon", in: CODES+ISSS (2014), pages 1-10, describe a more efficient alternative for TDP called Thermal Safe Power (TSP). TSP considers the spatiality of active cores to provide a per-core budget that is often much higher than the budget determined based on TDP, while still providing guarantees for thermally safe operation of the processor. TSP determines a per-core power budget based on the core's steady-state temperature - i.e., the long-term equilibrium temperature a core attains with constant power consumption and a given spatial distribution of active cores - and limits the power consumption such that the steady-state temperature does not exceed the temperature threshold. Thus, by determining a power budget per core instead of per chip, TSP offers more opportunities to safely improve system performance - using techniques such as Dynamic Voltage and Frequency Scaling (DVFS) - than chip-level TDP.

However, also using TSP, the active cores are not constantly running at the temperature threshold. Hence, the power budget determined using TSP is generally smaller than the theoretical maximum power budget.

There is therefore a need in the art for a method that further increases performance of a multi-core processor without risk of overheating.

Summary of the invention

It is an aim of the embodiments in this disclosure to provide a method to increase processor performance of a multi-core processor in a thermally safe way.

In a first aspect, the invention may relate to a computer-implemented method for determining a power budget for a processor with a plurality of processor cores, preferably general purpose cores, e.g. a multiple instruction, multiple data processor. The method may comprise determining or receiving a threshold temperature for each processor core of the plurality of processor cores, determining or receiving a current temperature for each processor core of the plurality of processor cores, and determining a power budget for one or more processor cores of the plurality of processor cores based on the current temperatures, the threshold temperatures, and a thermal model of the processor. Preferably, the thermal model comprises a mathematical representation of heat generation and heat flow in the processor. In an embodiment, the method may further comprise determining or receiving the thermal model.

In this context, determining a power budget for a multi-core processor means determining a power-budget for one or more cores of the multi-core processor. As used herein, a multi-core processor may refer to any processor comprising a plurality of asynchronous and/or independent processor cores, including so-called many-core processors.

As used herein, a power budget for a core represents the maximum amount of power a core is allowed to consume. In a typical processor, the amount of power available to a core can be adjusted by adjusting, e.g., voltage and clock speed. A core may not always be able to consume the full power budget, e.g., due to limitations on voltage and clock speed. A core may furthermore use less power than budgeted to it if the core executes fewer instructions than maximally possible.

This way, the method may maximise the power budget for one or more processor cores, or at least increase the power budget compared to existing power budgeting techniques such as TSP. By using the current temperature of the processor cores and the threshold temperature, it is possible to determine the available thermal headroom for each processor core. By using a thermal model of the processor, it is possible to predict a temperature development for a given power budget. Thus, a power budget can be determined that makes use of at least part of the thermal headroom, without exceeding the core's threshold temperature. The determined power budget may be used to control the processor cores.

In this context, thermal headroom refers to the difference between the actual (transient) temperature core and the threshold temperature. In general, the presence of a thermal headroom is an indication that a core is consuming less power than is possible based on thermal constraints, and therefore may be underperforming.

In an embodiment, determining a power budget comprises determining, for the one or more processor cores, a thermal headroom based on a difference between the current temperature and the threshold temperature for the respective one or more processor cores. Determining the power budget may further comprise determining, based on the thermal model, a power budget for the one or more processor cores that minimises the thermal headroom for the one or more processor cores. By minimising the thermal headroom, the processor performance may be maximised.

In an embodiment, the steps of determining the current temperature and determining the power budget are repeated for a plurality of consecutive epochs. An epoch preferably has a duration of at most 10 ms, more preferable at most 1 ms, even more preferably at most 500 $\mu$s, yet more preferably at most 200 $\mu$s, most preferably at most 100 $\mu$s.

As used herein, an epoch refers to a duration during which a power budget determined for or assigned to a core is not changed. Thus, the power budget may be determined periodically at the beginning of each epoch. In general, a shorter epoch leads to a more fine-grained control, and hence to a higher performance. On the other hand, a longer epoch may lead to a lower computational overhead, as the power budget is determined less frequently.

In an embodiment, the method may further comprise determining or receiving an overhead time representing a delay between a start of determination of the current temperature and application of the computed power budgets. In such an embodiment, the method may further predicting an initial temperature based on the current temperature and the overhead time. The determination of the power budget may then be based on the predicted initial temperature. This way, temperature changes that may occur during computation of the power budget may be accounted for, resulting in a more accurate temperature prediction. This may in turn lead to a higher thermal safety, or to a higher performance by being able to use a smaller safety margin.

In an embodiment, the method may further comprise determining or receiving an ambient temperature. The determination of the power budget may be based on the ambient temperature. The ambient temperature can be predetermined based on design considerations, or may be measured periodically. By taking the ambient temperature into account, a more accurate temperature prediction may be obtained, again leading to a higher thermal safety and/or a higher performance.

In an embodiment, the thermal model is an RC thermal model, preferably a Cauer RC thermal model. The RC thermal model may comprise nodes representing the processor cores. The RC thermal model may additionally comprise one or more nodes representing a cooling system in thermal contact with the processor. The nodes may be associated with thermal capacitances and the connections between neighbouring nodes may be represented by thermal resistances. The model may be of the form

$$\mathsf{A}\,T' + \mathsf{B}\,T = P + T_{\text{amb}}\,G \qquad (1)$$

wherein A is a matrix representing the thermal capacitances, **B** is a matrix representing the thermal resistances, T is a vector representing the temperatures of the nodes, *T'* is a vector representing the temporal derivative of *T*, *P* is a vector representing the power consumption of the nodes, $T_{\text{amb}}$ is a scalar representing an ambient temperature, and G is a vector representing a thermal resistance between the nodes and the ambient temperature.

This is an accurate and computationally efficient way of modelling the temperature development based on the determined or received temperatures and a potential power budget. The matrices **A** and **B** and the vector **G** may be determined at design time.

In an embodiment, determining the power budget for the processor cores comprises solving for **P**:

$$Q\ T(t + \tau) - R\ T(t) = B^{-1}\ P + T_{amb}\ B^{-1}\ G, \tag{2}$$

wherein $Q = (I - e^{C\tau})^{-1}$, $R = (I - e^{C}{}_{\mathcal{T}})^{-1}\ e^{C}{}_{\mathcal{T}}$, r represents an epoch length, and $t$ represents an initial time, and wherein I is the identity matric, $C = -A^{-1}\ B$, and $M^{-1}$ represents a matrix inverse of a matrix **M**.

The matrices **Q**, **R**, and **B**$^{-1}$ may be precomputed at design time based on the matrices **A** and **B.** This is an efficient way of computing the power budget based on measured temperatures and the temperature threshold.

In an embodiment, the method may further comprise determining or receiving an idle power budget, and determining or receiving, for each processor core, an indication an active/idle state of the core. As used herein, an idle power budget refers to a minimum amount of power that should be available for each core even when the core is idle, e.g. to power components associated with the core such as an LLC bank.

In such an embodiment, determining the power budget may comprise assigning the idle power budget to the idle cores. Assigning an idle power budget to idle processor core ensures idle cores receive sufficient power to keep functioning but no excess power. Moreover, using fixed values for idle cores reduces the computational burden of the determination of the power budget.

In an embodiment, the method may further comprise assigning, based on the determined power budget, a voltage and/or clock speed for the one or more processor cores. This way, the determined power budget may be applied to the cores, ensuring high but thermally safe performance of the processor.

In an embodiment, determining a current temperature of a processor core comprises measuring the temperature of the processor core using a thermal sensor, e.g., a thermal diode. Preferably, the temperature is measured in the same way as is done by the DTM.

In an embodiment, the method may further comprise determining or receiving a work load for the one or more processor cores. In such an embodiment, determining the power budget may comprise determining the power budget based on the work load for the respective one or more processor cores. Taking account of the workload may lead to a more fine-grained power distribution.

In another aspect, the invention may relate to a processing component, e.g. an application-specific integrated circuit (ASIC) or integrated co-processor, comprising a computational circuit and a memory, the computational circuit being configured for carrying out the method steps described above. The processing component may be referred to as a thermal controller. In a further aspect, the invention may relate to a multi-core processor comprising such a processor module.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including a functional or an object oriented programming language such as Java(TM), Scala, C++, Python or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer, server or virtualized server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), or graphics processing unit (GPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

Brief description of the drawings

Aspects of the invention will be explained in greater detail by reference to exemplary embodiments shown in the drawings, in which:

Fig. 1 depicts a schematic overview of a multi-core processor according to an embodiment of the invention;
Fig. 2 depicts a flow diagram of a method for determining a power budget for a multi-core processor according to an embodiment of the invention;
Fig. 3 depicts the determination of a thermal model according to an embodiment of the invention;
Fig. 4 depicts a flow diagram of a method for determining a power budget for a multi-core processor according to an embodiment of the invention; and
Figs. 5A-5C are graphs comparing processor performance using a method according to an invention with a state-of-the-art power budgeting method.

Detailed description

The embodiments in this disclosure describe methods for determining a power budget for processor cores of a multi-core processor.

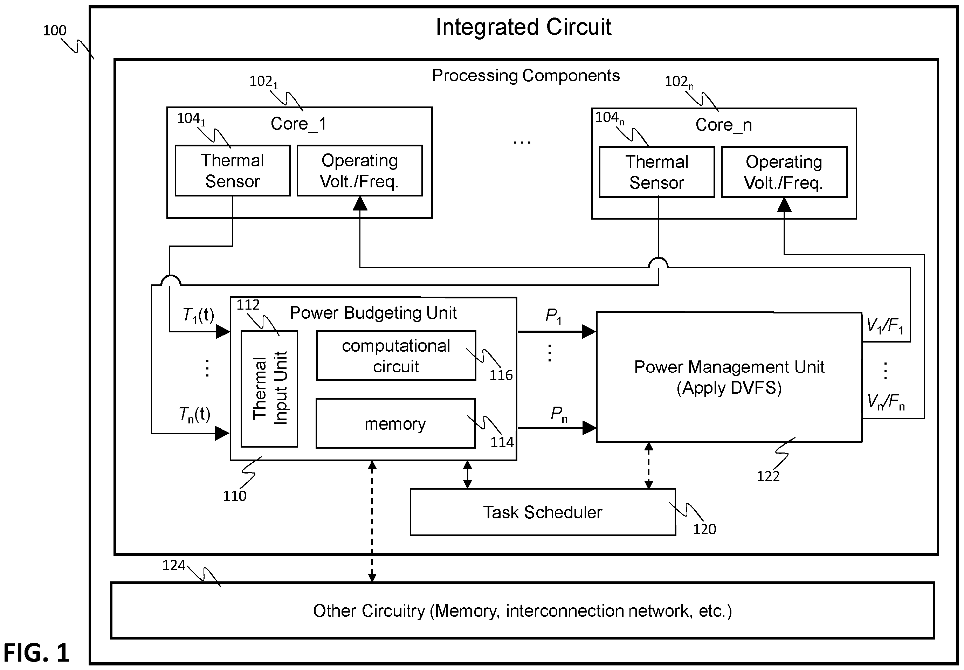

**Fig. 1** depicts a schematic overview of a multi-core processor according to an embodiment of the invention. The multi-core processor **100** comprises a plurality of $n$ cores $102_{1-n}$ ($n > 1$). Currently, typical numbers of processor cores range from about 2 to 64, with processors with 16-64 processor cores sometimes known as many-core processors. However, in principle, the method disclosed herein can work for any number of processor cores. The processor cores are typically general-purpose processor cores, e.g. multiple-instruction, multiple-data cores. The cores can be asynchronous and/or independent processor cores.

For each processor core $102_{1-n}$, a thermal sensor $104_{1-n}$ monitors the temperature. The thermal sensor can be an integrated thermal sensor or an external thermal sensor. In some embodiments, both an integrated thermal sensor and an external thermal sensor may be used. The thermal sensor can include, e.g., a thermal diode or a bipolar junction transistor. The thermal sensor is typically a digital thermal sensor, e.g. a thermal diode. If the processor comprises Dynamic Thermal Management (DTM), the current method preferably uses the same thermal sensor or thermal sensors as the DTM. In some processors, the sensor output may be pre-processed, e.g., a number of sensor read-outs may be averaged. In such cases, the input to the power budgeting algorithm preferably uses the same pre-processing of the sensor data as the DTM.

The processor **100** additionally comprises a power budgeting unit **110**. The power budgeting unit can be, e.g., an application-specific integrated circuit (ASIC) or integrated co-processor. The power budgeting unit comprises a thermal input 112 unit for receiving temperature data $T_{1-n}$ for each of the one or more processor cores $102_{1-n}$. The temperature data may be received directly from the thermal sensors $104_{1-n}$ or may be received in an indirect manner; for example, the thermal input unit may periodically read the temperature data from a registry.

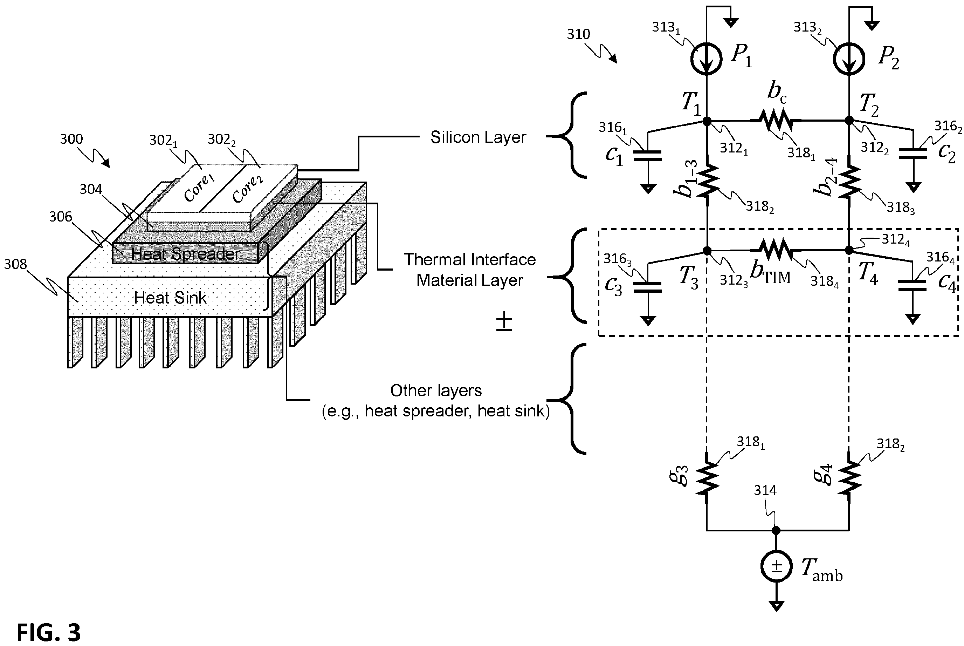

The power budgeting unit **110** further comprises a memory **114** and a computational circuit **116**. The memory may comprise a thermal model of the processor. For example, the memory may comprise data representing the processor, or parts of the processor. The data may comprise one or more matrices representing the processor, or at least the processor cores, for use in an RC thermal model. The thermal model will be explained in more detail below with reference to **Fig. 3**. The memory may also comprise a threshold temperature.

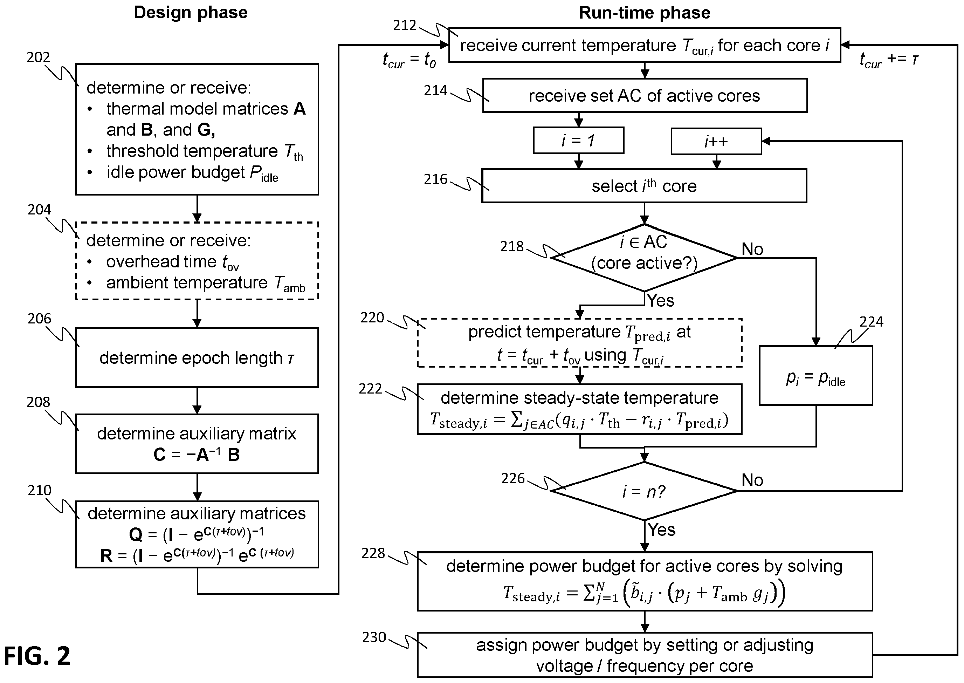

The memory **114** may further comprise instructions for the computational circuit **116.** These instructions may allow the computational circuit to determine a power budget for one or more processor cores $102_{1-n}$ based on the current temperatures of the processor cores, the threshold temperature, and the thermal model. The power budget may comprise a amount of power $P_{1-n}$ that may be consumed by each processor core without violating thermal constraints. The determination of the power budget is explained in more detailed below with reference to **Fig. 2.**

The power budgeting unit **110** may be communicatively connected to a task scheduler **120**. The power budgeting unit may receive information from the task scheduler regarding the activity of the cores. For example, the power budgeting unit may receive a list of all cores that are considered active and/or a list of all cores that are considered idle. This way, active cores may receive a higher power budget than idle cores. In some embodiments, the power budgeting unit may receive more detailed information; for example, if a core is waiting for a thread executed by another core to be finished, the waiting core is considered active but performs very few operations, and consequently, the waiting core may be provided a lower power budget.

The power budgeting unit **110** may be communicatively connected to a power management unit **122.** The power management unit may receive the power budget from the power budgeting unit and may assign the power budget to the processor cores, typically by determining a voltage and/or clock frequency for the cores, e.g., by applying well-known techniques such as dynamic voltage scaling and/or dynamic frequency scaling (together also known as dynamic voltage and frequency scaling, DVFS). This may result in a set of voltage $V_{1-n}$ and a set of clock frequencies $F_{1-n}$ for the respective processor cores. In some embodiments, the power budgeting unit and the power management unit can be (parts of) the same ASIC, and in other embodiments they can integrated into separate ASICs.

By applying the voltages and frequencies determined by the power management unit, the processor cores $102_{1-n}$ may be constrained to the power budget determined by the power budgeting unit. This way, the performance of the processor **100** may be maximised, or at least increased, while the risk of overheating is avoided, or at least reduced.

The processor **100** may further comprise additional circuitry **124**, e.g., cache memory, an interconnection network, possibly a network on a chip, et cetera. In some embodiments, the power budget unit may be communicatively connected to one or more other components, e.g., to receive an ambient temperature. In some embodiments, the thermal model may include a temperature of one or more of these additional circuitry components. In that case, these temperatures may be taken into account when determining a power budget.

**Fig. 2** depicts a flow diagram of a method for determining a power budget for a multi-core processor according to an embodiment of the invention. In general, the method can be divided into two parts or phases: a design phase, in this example comprising steps **202-210,** and a runtime phase, in this example comprising steps **212-230.** In other embodiments, some steps may be performed in a different order or in a different phase. The steps in the design phase are typically performed by a general purpose computer, e.g. as part of a design of a multi-core processor. The steps in the run-time phase are typically executed by a power budgeting unit integrated in the multi-core processor.

In a first step **202**, the method may comprise determining or receiving one or more input parameters characterising the thermal behaviour of the multi-core processor. For example, the multi-core processor may be characterised by an RC thermal model as described below with reference to **Fig. 3**, and the input parameters may comprise the thermal model matrices **A**, **B**, and **G** as defined below with reference to equation (3). Step **202** may further comprise determining or receiving input parameters related to the design of the multi-core processor, such as a threshold temperature $T_{\text{th}}$ and an idle power budget $P_{\text{idle}}$.

The threshold temperature may represent the maximum safe operating temperature. If the processor comprises a DTM system, the threshold may be based on the temperature at which the DTM system is activated. The threshold may, e.g., be equal to the DTM activation temperature, or may be a predetermined amount lower to prevent accidental activation of the DTM system, for example due to inaccurate temperature sensors. Usually, there is a single threshold temperature for the entire processor, but the current method is equally applicable to implementations with a plurality of threshold temperatures, e.g. different threshold temperatures for a processor comprising different types of cores.

The idle power budget may represent a minimum amount of power that should be available for each core.

A next step **204** may comprise determining or receiving optional input parameters, for example the overhead time $t_{\text{ov}}$ and/or the ambient temperature $T_{\text{amb}}$. The overhead time may represent the time required for each iteration of the run-time phase. The overhead time typically depends on the design of the power budget unit. The overhead time may further depend on the number of processor cores and the details of the computational method used to determine the power budget. In some embodiments, the overhead time may be considered negligible. In such embodiments, the step of determining or receiving the overhead time may be left out.

The ambient temperature represents the temperature of the environment to which the heat generated by the processor cores is dissipated. The ambient temperature can e.g. represent the temperature of the heat sink, or the temperature of the ambient air. Depending on the implementation, the ambient temperature can be known or estimated during design, and a fixed value can be used. In other implementations, the ambient temperature can be determined periodically during run-time. Typically, the ambient temperature changes relatively slowly, and consequently the current ambient temperature may be determined less frequently than once per iteration of the run-time phase.

A next step **206** may comprise determining an epoch length $I$. The epoch length is the time interval between consecutive iterations of the run-time phase, and hence between consecutive power budget determinations. An epoch preferably has a duration of at most 10 ms, more preferable at most 1 ms, even more preferably at most 500 $\mu$s, yet more preferably at most 200 $\mu$s, most preferably at most 100 $\mu$s. In general, a shorter epoch length may lead to a higher performance of the processor. However, the epoch length should preferably be longer than the overhead time.

A step **208** may comprise determining intermediate information based on the input information, e.g., determining an auxiliary matrix **C** as explained below with reference to equation (5). A step **210** may comprise precomputing parts of the solution that is used to determine the power budget. In the depicted example, auxiliary matrices **Q** and **R** may be determined, based on auxiliary matrix **C**, the epoch length r, and, when applicable, the overhead time $t_{\text{ov}}$. Precomputing parts of the solution leads to a more efficient power budget determining algorithm.

In a typical embodiment, the precomputed auxiliary matrices **Q** and **R** and the vector **G**, the threshold temperature $T_{\text{th}}$, the idle power budget $P_{\text{idle}}$, the epoch length $T$, the overhead time $t_{\text{ov}}$, and the (estimated) ambient temperature $T_{\text{amb}}$ may be stored in a memory of the power budget unit.

A step **212** may comprise receiving a current temperature $T_{\text{cur}}$ for each core. In some processors, multiple temperatures may be determined for each processor core. Additionally, temperatures may be determined for processor parts other than processor cores. Therefore, in some embodiments, the step **212** may comprise receiving several temperatures for each processor core and/or receiving additional processor temperatures. In some embodiments, the ambient temperature may be received periodically, e.g., every iteration or less frequently.

A step **214** may comprise receiving a set AC of active cores. The set of active cores may indicate for which processor cores the power budget should be maximised. In other embodiments, a set of idle cores may be received instead. In some embodiments, a workload for each processor core may be received. From this workload, an active or idle status may be deduced.

A step **216** may comprise selecting the $I^{\text{th}}$ core, where $i$ initially has a value of one. A next step **218** may comprise determining whether the selected core is active or idle, e.g., by determining whether the core is in the received set of active cores AC. If the core is active and the overhead time is non-negligible, in a step **220**, a predicted temperature $T_{\text{pred},i}$ may be determined for the selected core based on the selected core's current temperature $T_{\text{cur},i}$ and the selected core's current power budget, where the predicted temperature predicts the temperature of the core at the end of the current iteration of the run-time phase, i.e., the core's temperature at the moment in time the newly determined power budget will be applied. If the overhead time $t_{\text{ov}}$ is negligible or not known, this step may be omitted.

In a next step **222**, a steady state temperature $T_{\text{steady},i}$ may be determined for the selected core such that the transient temperature at the end of the coming epoch equals the threshold temperature for the selected core. Thus, the steady state temperature is a 'fictional' steady state temperature that would be achieved if the core would continue to use the full power budget assigned to it; but as the power budget is re-determined after each epoch, this fictional steady state temperature is usually not achieved in practice. Hence, the steady state temperature is typically higher than the threshold temperature.

If the selected core is not an active core, in a step **224,** the idle power budget is assigned to the selected core.

A next step **226** may comprise determining whether the selected core is the last core. If not, counter $i$ may be increased and steps **216-226** may be repeated for the next core.

Once for all active cores a steady state temperature has been determined, and all idle cores have been assigned the idle power budget, in a step **228**, the power budget $P_i$ may be determined for the active cores, based on the determined steady state temperatures, the ambient temperature, and the thermal model of the processor. In a typical embodiment, steps **212-228** are executed once per epoch by the power budget unit.

In a next step **230**, the determined power budget may be applied, e.g. by adjusting the voltage and or clock speed of the processor cores. In a typical embodiment, this step is performed by the power management unit. In some cases, a core cannot use the full power budget assigned to it, e.g., because of other limitations to voltage and/or clock speed.

Depending on the epoch length and the overhead time, the system may then wait for the start of a new epoch, after which steps **212-230** may be repeated. In some embodiments, step **230** may be executed in parallel with the next iteration of steps **212-228.**

**Fig. 3** depicts the determination of a thermal model according to an embodiment of the invention. In some embodiments, the thermal model is an RC thermal model, preferably a Cauer RC thermal model. An RC model of a thermal system is based on a duality between thermal behaviour and electrical circuits. An example of such a model is presented in W. Huang et al., "Hotspot: A compact thermal modeling methodology for early-stage VLSI design", IEEE Transactions on very large scale integration (VLSI) systems, 14:5 (2006), pages 501-513, which is hereby incorporated by reference.

The thermal model comprises a plurality of nodes, wherein each node is associated with a heat capacity and/or (electrical) capacitance, and wherein connections between nodes are associated with a (thermal or electrical) resistance. The duality between the electrical and the thermal model exists in the mapping of the electrical capacitance on the heat capacity and the electrical resistance on the thermal resistance. The voltage at each node then corresponds to the temperature at the node, and the current corresponds to the power consumption. In a Cauer RC model, the thermal capacitances are all connected to the thermal ground.

The parameter values may be determined by testing the processor under known circumstances. The model comprises $n$ nodes corresponding to the $n$ processor cores, and zero or more nodes representing the cooling system (e.g. heat spreader, heat sink, et cetera). The model furthermore comprises one special node corresponding to the ambient temperature. In the following, a lowercase $n$ represents the number of processor cores and an uppercase $N$ represents the sum of the $n$ nodes representing the processor cores and the $N - n$ nodes representing the cooling system. Some embodiments do not model the cooling system with nodes, and in those embodiments $N = n$.

Thus, a linear system of $N$ first-order differential equations may be obtained to model the transient temperature as:

$$\mathbf{A} \cdot \mathbf{T'} + \mathbf{B} \cdot \mathbf{T} = \mathbf{P} + T_{amb}\, \mathbf{G} \qquad (3)$$

wherein A is an $N{\times}N$-dimensional diagonal matrix representing the heat capacities, B is an $N{\times}N$-dimensional symmetric matrix representing the thermal resistances, $\mathbf{T}$ is an $N$-dimensional vector representing the temperatures of the nodes, $\mathbf{T'}$ is an $N$-dimensional vector representing the temporal derivative of $\mathbf{T}$, $\mathbf{P}$ is an $N$-dimensional vector representing the power consumption of the nodes, $T_{amb}$ is a scalar representing an ambient temperature, and $\mathbf{G}$ is an $N$-dimensional vector representing a thermal resistance between the nodes and the ambient temperature.

In the example depicted in **Fig. 3**, the processor **300** comprises two processor cores **302$_{1,2}$** which are represented in the thermal model **310** by, respectively node 1 **312$_1$** and node 2 **312$_2$**. Nodes 1 and 2 are associated with heat capacities $c_1$ **316$_1$** and $c_2$ **316$_2$**, respectively, as well as with temperatures $T_1$ and $T_2$ respectively. Additionally, the nodes consume respective amounts of input power $P_1$ **313$_1$** and $P_2$ **313$_2$**. The thermal resistance **318$_1$** between nodes 1 and 2 is represented by $b_c$.

The thermal model further comprises two nodes **312$_{3,4}$**, labelled nodes 3 and 4, representing the thermal interface material layer **304**, which is the part of the cooling system in direct contact with the processor cores. Node 3 represents the part of the thermal interface material closer to node 1 than to node 2, and node 4 represents the part of the thermal interface material closer to node 2 than to node 1. Node 3 and 4 are associated with heat capacities $c_3$ **316$_3$** and $c_4$ **316$_4$**, respectively, as well as with temperatures $T_3$ and $T_4$ respectively. The thermal resistance **318$_2$** between node 1 and node 3 is represented by $b_{1-3}$ and the thermal resistance **318$_3$** between node 2 and node 4 is represented by $b_{2-4}$. The thermal resistance **318$_4$** between nodes 3 and 4 is represented by $b_{TIM}$.

The thermal model further comprises an ambient node **314**, represented by a fixed temperature $T_{amb}$. In this context, a fixed temperature means that $T_{amb}$ is a model parameter and not a variable. In some embodiments, the value of $T_{amb}$ may vary between iterations of the method. The ambient node is not associated with a thermal capacity. The thermal resistance **320₁** between the ambient node and node 3 is represented by $g_3$ and the thermal resistance **320₂** between the ambient node and node 4 is represented by $g_4$.

Thus, for the model depicted in **Fig. 3**, equation (3) can be written as:

$$\begin{pmatrix} c_1 & 0 & 0 & 0 \\ 0 & c_2 & 0 & 0 \\ 0 & 0 & c_3 & 0 \\ 0 & 0 & 0 & c_4 \end{pmatrix} \cdot \begin{pmatrix} T_1' \\ T_2' \\ T_3' \\ T_4' \end{pmatrix} + \begin{pmatrix} 0 & b_c & b_{1-3} & 0 \\ b_c & 0 & 0 & b_{2-4} \\ b_{1-3} & 0 & 0 & b_{TIM} \\ 0 & b_{2-4} & b_{TIM} & 0 \end{pmatrix} \cdot \begin{pmatrix} T_1 \\ T_2 \\ T_3 \\ T_4 \end{pmatrix} = \begin{pmatrix} P_1 \\ P_2 \\ 0 \\ 0 \end{pmatrix} + T_{amb} \cdot \begin{pmatrix} 0 \\ 0 \\ g_3 \\ g_4 \end{pmatrix} \quad (4)$$

Other embodiments may comprise only nodes for the cores and the ambient temperature, in this case nodes 1 and 2 and the ambient node. Yet other embodiments may comprise additional nodes for additional layers.

This way, the temperature development of the processor may be modelled based on the determined or received temperatures and a potential power budget. The matrices **A** and **B** and the vector **G** may be determined at design time. Based on these matrices **A** and **B**, an auxiliary matrix $C = -A^{-1} \cdot B$ may be determined, wherein $M^{-1}$ represents a matrix inverse of a matrix **M.** Equation (3) may then be rewritten as:

$$T' = C \cdot T + A^{-1} \cdot P + T_{amb} A^{-1} \cdot G \quad (5)$$

For the steady-state temperature $T_{steady}$, the time derivative of the temperature is by definition equal to zero, and hence the steady-state temperature may be given by:

$$T_{steady} = B^{-1} \cdot P + T_{amb} B^{-1} \cdot G, \quad (6)$$

Here, $B^{-1} \cdot P$ represents the heat contribution of a node j to the steady state temperature of a node $i$.

In order to more efficiently exploit the available thermal headroom in the system to improve system performance, an accurate and dynamic power budget of the active cores may be derived based on their transient temperature. This can be achieved by solving equation (5) to obtain the relation between the transient temperature of the cores and their power consumption. A vector of current temperatures $T_{cur}$ may be used as initial condition. If current temperatures are not known for some nodes, e.g. nodes that do not represent processor cores, estimates may be used. These estimates can be based on the computed temperatures of a previous iteration. Assuming that **P** is the new power vector after any change in power consumption of one or more cores that happens at time t = 0, an analytical solution of equation (5) may be obtained by using matrix exponentials as follows:

$$T(t) = T_{steady} + e^{C t} (T_{cur} - T_{steady}) \quad (7)$$

where $T_{steady}$ is the steady-state temperature based on the new power budget. The factor $e^{Ct}$ may be computed as

$$e^{C t} = V \cdot D \cdot V^{-1} \quad (8)$$

where **V** represent a matrix containing the eigenvectors of matrix **C**, and **D** is a diagonal matrix defined by

$$D = \begin{pmatrix} e^{\lambda_1 t} & 0 & \cdots & 0 \\ 0 & e^{\lambda_1 t} & \cdots & 0 \\ \vdots & \vdots & \ddots & \vdots \\ 0 & 0 & \cdots & e^{\lambda_N t} \end{pmatrix} \quad (9)$$

where $\lambda_i$ is the $i^{th}$ eigenvalue of matrix **C.** As matrix **C** is defined in terms of only matrices **A** and **B,** matrix **C** and its exponentiation $e^{C}_t$ can be precomputed.

To maximally exploit the thermal headroom, the core temperature of the active cores should equal the threshold

temperature $Tt_h$ at the end of the epoch for which the power budget is being computed, that is:

$$T(t+\tau) = T_{th} \tag{10}$$

for at least the active cores. In combination with equation (6), this results in:

$$T_{steady} = (I - e^{C\tau})^{-1} (T_{th} - e^{C\tau} T_{cur}) \tag{11}$$

where $I$ is the identity matrix. By defining auxiliary matrices $\mathbf{Q}$ and $\mathbf{R}$ as

$$\mathbf{Q} = (I - e^{C\tau})^{-1}, \ \mathbf{R} = (I - e^{C\tau})^{-1} e^{C\tau} \tag{12}$$

equation (11) can be rewritten as

$$T_{steady} = \mathbf{Q} \, T_{th} - \mathbf{R} \, T_{cur} \tag{13}$$

Again, $\mathbf{Q}$ and $\mathbf{R}$ only depend on hardware-specific parameters, and can hence be precomputed.

The power budget for the active processor cores can then be obtained by combining equations (6) and (13) and solving for P:

$$\mathbf{Q} \, T_{th} - \mathbf{R} \, T_{cur} = \mathbf{B}^{-1} \, P + T_{amb} \, \mathbf{B}^{-1} \, G. \tag{14}$$

By using the current temperature of the processor cores and the threshold temperature, it is possible to determine the available thermal headroom for each processor core. By using a thermal model of the processor, it is possible to predict a temperature development for a given power budget. Thus, a power budget can be determined that makes use of at least part of the thermal headroom, without exceeding the core's threshold temperature.

In some embodiments, there may be a non-negligible overhead time $t_{ov}$, i.e., the time needed by the power budgeting unit to determine a power budget. In such embodiments, there can be a difference between the temperature measured at the beginning of the algorithm, and the temperature at the time the new power budget is applied.

In an embodiment, the method may further comprise determining or receiving an overhead time representing a delay between a start of a computational epoch and application of the computed power budgets. In such an embodiment, the method may further predicting an initial temperature based on the current temperature and the overhead time. The determination of the power budget may then be based on the predicted initial temperature. This way, temperature changes that may occur during computation of the power budget may be accounted for, resulting in a more accurate temperature prediction. This may in turn lead to a higher thermal safety, or to a higher performance by being able to use a smaller safety margin.

This implies that the newly computed power budget values in the current epoch, beginning at time t, are available and effectively applied at the time $t + t_{ov}$. Meanwhile, during $[t, t + t_{ov}]$, the active cores can still consume power according to their assigned power budget in the previous epoch. However, the cores may have different temperatures at time $t + t_{ov}$ compared to time $t$. Thus, the newly computed power budget values can be improved by using not the current temperature but an estimate of the core temperature at the time of application of the new power budget.

Therefore, a predicted temperature $T_{pred}$ may be determined representing an estimated temperature at the time the new power budget will be applied. This predicted temperature may be determined based on the current temperature $T_{cur}$, the current power budget as reflected in the steady state temperature for the last epoch, the overhead time $t_{ov}$, and equation (7).

$$T_{pred} = T_{steady} + e^{C \, t_{ov}} (T_{cur} - T_{steady}) \tag{15}$$

As was mentioned above, the matrix exponential $e^{Ctov}$ can be precomputed, e.g. in the form of a matrix $S = \mathbf{V} . \mathbf{D} . \mathbf{V}^{-1}$.

Then the new power budget may be determined based on the predicted temperature by solving, for the active cores, the following equation for $P$:

$$Q\ T_{\text{th}} - R\ T_{\text{pred}} = B^{-1}\ P + T_{\text{amb}}\ B^{-1}\ G. \hspace{3cm} (16)$$

The computation described above are typically only performed for the active cores. Therefore, the method may further comprise determining or receiving an idle power budget, and determining or receiving, for each processor core, an indication of an active/idle state of the core. In such an embodiment, determining the power budget may comprise assigning the idle power budget to the idle cores. Assigning an idle power budget to idle processor core ensures idle cores receive sufficient power to keep functioning (e.g. to power an LLC bank associated with the core) but no or little excess power. Moreover, using fixed values for idle cores reduces the computational burden of the determination of the power budget.

A potential implementation of the algorithm in pseudo-code is included below.

---

**Algorithm for determining a power budget**

---

**Input:** thermal model (matrices **A** and **B**, and vector **G**)

processor parameters: threshold temperature $T_{\text{th}}$, idle power consumption $P_{\text{idle}}$

method parameters: epoch length $\tau$, overhead time $t_{\text{ov}}$

current core temperatures $T_{\text{cur}}$, ambient temperature $T_{\text{amb}}$, set of active cores AC

**Output:** power budget $P$

```
/* Design-time phase */
/* Compute auxiliary matrices Q, R, and S */
```

1 **forall** $i = 1, \ldots, N$ **do**

**forall** $j = 1, ..., N$ **do**

$q_{ij} = \sum_{k=1}^{N} v_{ik} \left( 1/1 - e^{\lambda_k \tau} \right) \tilde{v}_{kj}$

$r_{ij} = \sum_{k=1}^{N} v_{ik} \left( e^{\lambda_k \tau}/(1 - e^{\lambda_k \tau}) \right) \tilde{v}_{kj}$

$s_{ij} = \sum_{k=1}^{N} v_{ik} \left( e^{\lambda_k t_{ov}} \right) \tilde{v}_{kj}$

    **done**

**done**

```
/* Run-time phase */
/* Initialise P, assign the idle cores a corresponding power
budget */
```

**forall** $i = 1, ..., N$ **do**

    **if** $i$ in AC **then**

        $P_i = 0$

    **else**

        $P_i = P_{idle}$

    **endif**

**done**

```
/* Predict the temperatures Tpred of the active cores at the time
when the new power budget is applied based on the steady state
temperatures Tsteady of the last epoch, the current temperatures
Tcur, and auxiliary matrix S */
```

**forall** $i$ in AC **do**

    $T_{pred,i} = T_{steady,i} + \sum_{j \in AC} s_{ij} T_{cur,j}$

**done**

```
/* Determine a new steady-state temperature Tsteady for each of the
active cores such that the temperature of each core equals the
threshold temperature at the end of the coming epoch, based on the
predicted temperatures Tpred, the threshold temperature Tth, and
auxiliary matrices Q and R */
```

**forall** $i$ in AC **do**

    $T_{steady,i} = T_{th} \sum_{j \in AC} q_{ij} - \sum_{j \in AC} r_{ij} T_{pred,j}$

**done**

```
/* Determine a new power budget P for the active cores based on
the determined steady-state temperatures Tsteady, the inverse matrix
B⁻¹, the vector G and the ambient temperature Tamb */
```

**forall** $i$ in AC **do**

    $T_{steady,i} = \sum_{j=1}^{n} \tilde{b}_{ij} P_j + T_{amb} \sum_{j=1}^{N} \tilde{b}_{ij} g_j$

**done**

**return** $P$

---

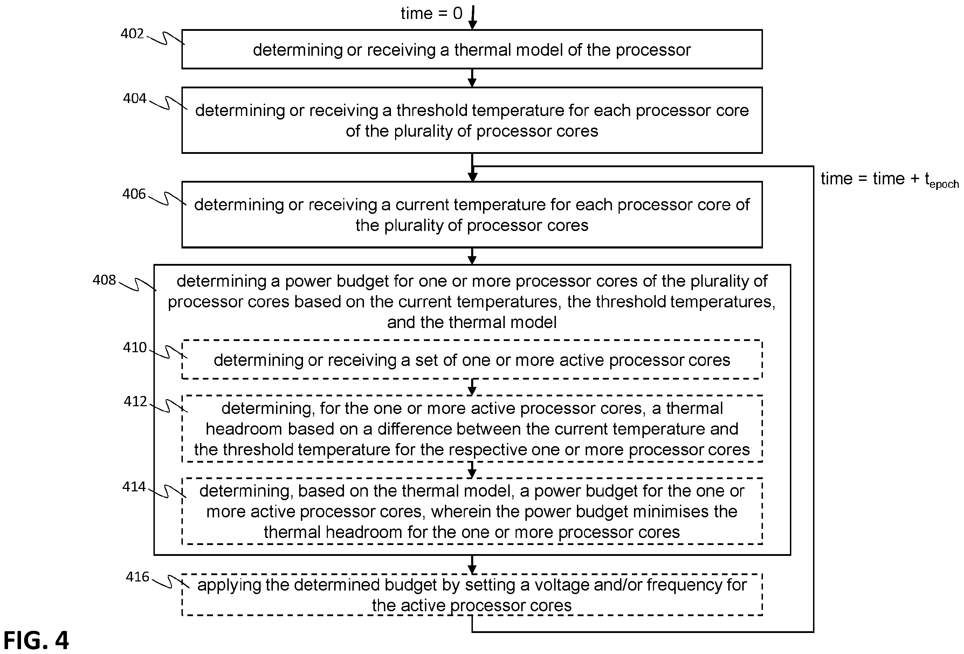

**Fig. 4** depicts a flow diagram of a method for determining a power budget for a multi-core processor according to an embodiment of the invention. In a first step **402**, the method may comprise determining or receiving a thermal model of the processor, for example a thermal model as described above with reference to **Fig. 3**. However, in general, any model capable of predicting the temperature of the processor cores based on a assigned power budget and the current processor core temperatures, may be used.

In a next step **404**, the method may comprise determining or receiving a threshold temperature for each processor core of the plurality of processor cores. Typically, each core has the same threshold temperature, and a single threshold value may be used.

In a next step **406**, the method may comprise determining a current temperature for each processor core of the plurality of processor cores. This determination is typically based on receiving temperature measurements from a temperature sensors in thermal contact with the processor cores. If the temperature sensors have a read-out rate that is higher than the rate with which the power budget is determined, determining the current temperature may comprise, e.g., averaging a plurality of temperature measurements or determining a temperature based on a curve fitted to a plurality of temperature measurements, the plurality of temperature measurements preferably being obtained within the last epoch.

In a next step **408,** the method may further comprise determining a power budget for one or more processor cores of the plurality of processor cores based on the current temperatures, the threshold temperatures, and the thermal model. The determination of the power budget may comprise, in a step **410**, determining or receiving a set of active processor cores. In a step **412**, the determination of the power budget may further comprise determining, for the one or more active processor cores, a thermal headroom based on a difference between the current temperature and the threshold temperature for the respective one or more processor cores. In a step **414**, the determination of the power budget may further comprise determining, based on the thermal model, a power budget for the one or more active processor cores, wherein the power budget minimises the thermal headroom for the one or more processor cores. The minimisation of the thermal headroom is typically achieved at the end of the epoch for which the power budget is determined.

In an optional step **416**, the method may further comprise applying the determined budget by setting a voltage and/or frequency for the active processor cores. The frequency and/or voltage may be determined for each core such that the power budget for the respective core is not exceeded. This way, thermally safe operation of the processor may be ensured.

By minimising the thermal headroom for the active processor cores, the power budget for the active processor cores is maximised, and consequently, processor performance may be maximised. A power budget represents the maximum amount of power available to a processor core. A processor core may use less power than the power budget allows, but not more. If the processor core uses less power, the final temperature at the end of the epoch is typically lower than the computed temperature.

The power budget may be determined periodically at the beginning of each epoch. In general, a shorter epoch leads to a more fine-grained control, and hence to a higher performance. On the other hand, a longer epoch may lead to a lower computational overhead, as the power budget is determined less frequently. Additionally, the epoch length should be longer than the overhead time.

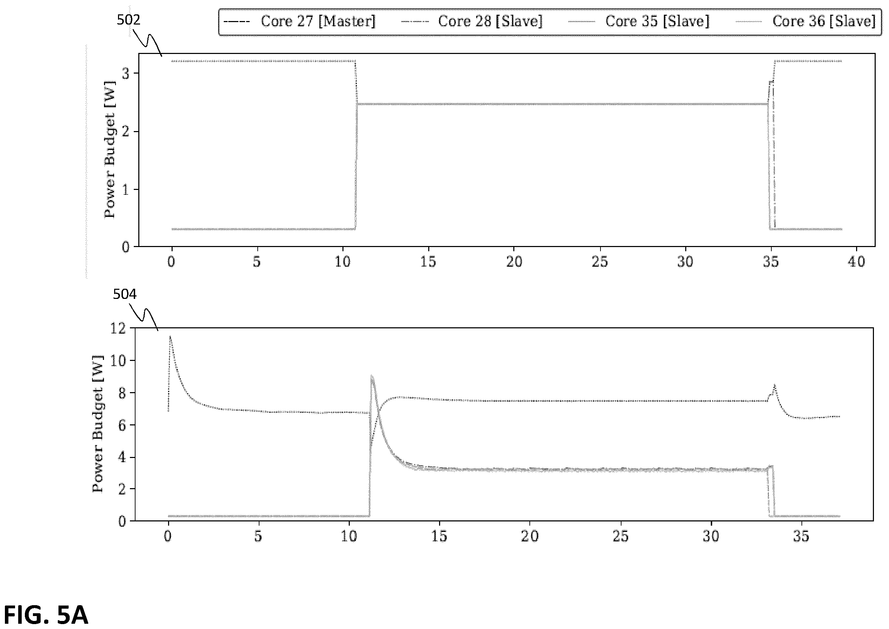

**Figs. 5A-5C** are graphs comparing processor performance using a method according to an invention with a state-of-the-art power budgeting method. The four central cores of a $8\times8$ many-core processor perform a four-threaded *blackscholes* benchmark application, the other cores are idle. The ambient temperature is assumed to be 45 °C and the threshold temperature is 70 °C. The epoch duration is 0.1 ms. During, roughly, the first 11 ms and the last 4 ms, the master core performs a number of computations, after which three slave cores are started, each executing threads in parallel. During this time, the master core is active, but waiting and hence performing very few operations.

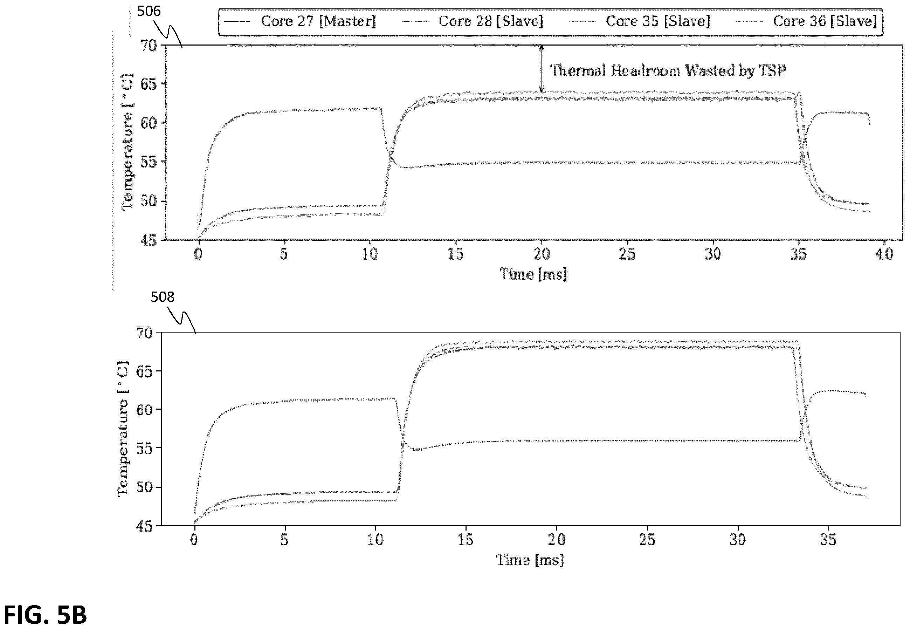

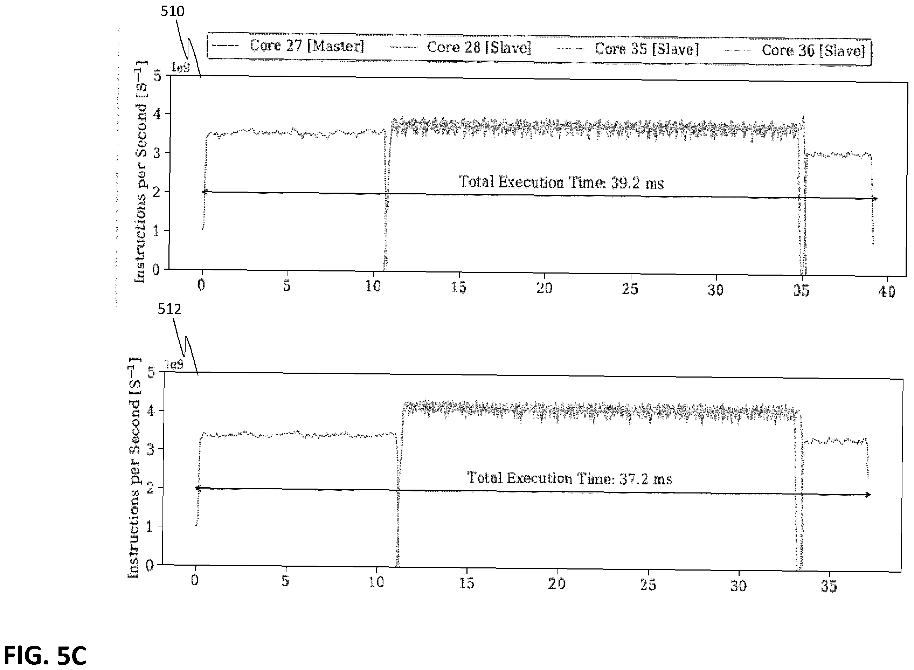

In particular, **Fig. 5A** represents the power budget **502** assigned to the four involved cores with a state-of-the-art Thermally Safe Power (TSP) method and the power budget **504** of the same cores using the method as described above with reference to **Fig. 2,** which will be referred to as the Transient-Temperature based Safe Power (T-TSP) method. **Fig. 5B** represents the resulting temperatures **506** of the cores using the TSP power budgeting method and the resulting temperatures **508** of the cores using the T-TSP power budgeting method. **Fig. 5C** represents the number of instructions per second **510** for the cores using the TSP power budgeting method and the number of instructions per second **512** for the cores using the T-TSP power budgeting method.

During the first 11 ms, the single active core is not capable of thermally straining the processor. Although the power budget determined using T-TSP is much higher than the power budget determined using TSP, the core is not capable of using the full power budget, and consequently, there is little difference in the number of instructions per second. However, in the second phase of the benchmark, the three active cores are capable of reaching the threshold temperature. During this phase, TSP assigns all active cores the same power budget of 2.5 W. This results in a wasted thermal headroom of about 6 °C. By taking the available thermal headroom into account, T-TSP assigns the slave cores a power budget of about 3.1 W, leading to a higher number of instructions per second, and therefore a 2 ms (5.1 %) shorter execution time.

The terminology used herein is for the purpose of describing particular embodiments only and is not intended to be limiting of the invention. As used herein, the singular forms "a" "an" and "the" are intended to include the plural forms as well, unless the context clearly indicates otherwise. It will be further understood that the terms "comprises" and/or "comprising" when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration, but is not intended to be exhaustive or limited to the implementations in the form disclosed. Many modifications and variations will be apparent to those of ordinary skill in the art without departing from the scope and spirit of the present invention. The embodiments were chosen and described in order to best explain the principles and some practical applications of the present invention, and to enable others of ordinary skill in the art to understand the present invention for various embodiments with various modifications as are suited to the particular use contemplated.

**Claims**

1. A computer-implemented method for determining a power budget for a processor with a plurality of processor cores, preferably general purpose processor cores, the method comprising:

   determining or receiving a threshold temperature for each processor core of the plurality of processor cores;
   determining or receiving a current temperature for each processor core of the plurality of processor cores;
   determining a power budget for one or more processor cores of the plurality of processor cores based on the current temperatures, the threshold temperatures, and a thermal model of the processor, the thermal model comprising a mathematical representation of heat generation and heat flow in the processor.

2. The method as claimed in claim 1, further comprising:
   assigning, based on the determined power budget, a voltage and/or clock speed to the one or more processor cores.

3. The method as claimed in claim 1 or 2, wherein determining a current temperature of a processor core comprises measuring the temperature of the processor core using a thermal sensor.

4. The method as claimed in any of the preceding claims, wherein determining a power budget comprises:

   determining, for the one or more processor cores, a thermal headroom based on a difference between the current temperature and the threshold temperature for the respective one or more processor cores; and,
   determining, based on the thermal model, a power budget for the one or more processor cores that minimises the thermal headroom for the one or more processor cores.

5. The method as claimed in any of the preceding claims , wherein the steps of determining the current temperature and determining the power budget are repeated for a plurality of consecutive epochs, an epoch preferably having a duration of at most 1 ms, more preferably at most 100 $\mu$s.

6. The method as claimed in claim 5, further comprising:

   determining or receiving an overhead time representing a delay between determination of the current temperature and application of the computed power budgets; and,
   predicting an initial temperature based on the current temperature and the overhead time.

7. The method as claimed in any of the preceding claims, further comprising determining or receiving an ambient temperature; and wherein
   determining the power budget comprises determining the power budget based on the ambient temperature.

8. The method as claimed in any of the preceding claims, wherein the thermal model is an RC thermal model, preferably a Cauer RC thermal model, the model comprising nodes representing the processor cores.

9. The method as claimed in claim 8, wherein the nodes are associated with thermal capacitances and wherein connections between neighbouring nodes are represented by thermal resistances, preferably the model being of the form

$$A\ T' + B\ T = P + T_{amb}\ G$$

wherein **A** is a matrix representing the thermal capacitances, **B** is a matrix representing the thermal resistances, $\boldsymbol{T}$ is a vector representing the temperatures of the nodes, $\boldsymbol{T'}$ is a vector representing the temporal derivative of $\boldsymbol{T}$, $\boldsymbol{P}$ is a vector representing the power consumption of the nodes, $T_{amb}$ is a scalar representing an ambient temperature, and $\boldsymbol{G}$ is a vector representing a thermal resistance between the nodes and the ambient temperature.

10. The method as claimed in claim 9, wherein determining the power budget for the processor cores comprises solving for P:

$$Q\ T_{th} - R\ T_{cur} = B^{-1}\ P + T_{amb}\ B^{-1}\ G,$$

wherein $\mathbf{Q} = (\mathbf{I} - e^{C}{}_{T})^{-1}$, $\mathbf{R} = (\mathbf{I} - e^{C}{}_{T})^{-1}\ e^{C_T}$, $T$ represents an epoch length, $T_{th}$ represents the threshold temperature, and $\boldsymbol{T}_{cur}$ represents the current temperature, and wherein **I** is the identity matric, $\mathbf{C} = -\mathbf{A}^{-1}\ \mathbf{B}$, and $\mathbf{M}^{-1}$ represents a matrix inverse of a matrix **M.**

11. The method as claimed in any of the preceding claims, further comprising:

   determining or receiving an idle power budget; and
   determining or receiving, for each processor core, an indication an active/idle state of the core; and,
   wherein determining a power budget comprises assigning the idle power budget to the idle cores.

12. The method as claimed in any of the preceding claims, further comprising:

   determining or receiving a work load for the one or more processor cores, and wherein
   determining the power budget comprises determining the power budget based on the work load for the respective one or more processor cores.

13. A processing component, e.g. an application-specific integrated circuit (ASIC) or integrated co-processor, comprising a computational circuit and a memory, the computational circuit being configured for carrying out the method steps according to any of the claims 1-12.

14. A processor comprising a plurality of general purpose cores, comprising a processing component as claimed in claim 13.

15. A computer program product comprising software code portions configured for, when executed by a computer, carrying out the method steps according to any of the claims 1-12.

16. A computer-readable storage medium comprising instructions which, when executed by a computer, cause the computer to carry out the method steps according to any of the claims 1-12.

**FIG. 1**

EP 4 152 124 A1

**Design phase**

**Run-time phase**

202 — determine or receive:
- thermal model matrices **A** and **B**, and **G,**
- threshold temperature $T_{th}$
- idle power budget $P_{idle}$

204 — determine or receive:
- overhead time $t_{ov}$
- ambient temperature $T_{amb}$

206 — determine epoch length $\tau$

208 — determine auxiliary matrix
$$\mathbf{C} = -\mathbf{A}^{-1}\,\mathbf{B}$$

210 — determine auxiliary matrices
$$\mathbf{Q} = (\mathbf{I} - e^{\mathbf{C}(\tau+tov)})^{-1}$$
$$\mathbf{R} = (\mathbf{I} - e^{\mathbf{C}(\tau+tov)})^{-1}\,e^{\mathbf{C}\,(\tau+tov)}$$

212 — receive current temperature $T_{cur,i}$ for each core $i$

$t_{cur} = t_0$

$t_{cur}\mathrel{+}= \tau$

214 — receive set AC of active cores

$i = 1$ $i\mathord{+}\mathord{+}$

216 — select $i^{th}$ core

218 — $i \in AC$ (core active?) — No

Yes

220 — predict temperature $T_{pred,i}$ at $t = t_{cur} + t_{ov}$ using $T_{cur,i}$

224 — $p_i = p_{idle}$

222 — determine steady-state temperature
$$T_{steady,i} = \sum_{j \in AC}(q_{i,j} \cdot T_{th} - r_{i,j} \cdot T_{pred,i})$$

226 — $i = n?$ — No

Yes

228 — determine power budget for active cores by solving
$$T_{steady,i} = \sum_{j=1}^{N}\left(\tilde{b}_{i,j} \cdot \left(p_j + T_{amb}\,g_j\right)\right)$$

230 — assign power budget by setting or adjusting voltage / frequency per core

**FIG. 2**

**FIG. 3**

time = 0

402 — determining or receiving a thermal model of the processor

404 — determining or receiving a threshold temperature for each processor core of the plurality of processor cores

time = time + $t_{epoch}$

406 — determining or receiving a current temperature for each processor core of the plurality of processor cores

408 — determining a power budget for one or more processor cores of the plurality of processor cores based on the current temperatures, the threshold temperatures, and the thermal model

410 — determining or receiving a set of one or more active processor cores

412 — determining, for the one or more active processor cores, a thermal headroom based on a difference between the current temperature and the threshold temperature for the respective one or more processor cores

414 — determining, based on the thermal model, a power budget for the one or more active processor cores, wherein the power budget minimises the thermal headroom for the one or more processor cores

416 — applying the determined budget by setting a voltage and/or frequency for the active processor cores

## FIG. 4

FIG. 5A

FIG. 5B

510

512

**FIG. 5C**

Europäisches
Patentamt

European
Patent Office

Office européen
des brevets

# EUROPEAN SEARCH REPORT

Application Number

EP 21 19 7574

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/277815 A1 (HANUMAIAH VINAY [US] ET AL) 18 September 2014 (2014-09-18) * paragraph [0006] – paragraph [0013] * * paragraph [0020] – paragraph [0057] * * figures 1-5 * | 1-16 | INV. G06F1/20 G06F1/3206 G06F1/324 G06F1/3296 |
| X | US 2015/346798 A1 (DONGARA PRAVEEN K [US] ET AL) 3 December 2015 (2015-12-03) * paragraph [0008] – paragraph [0011] * * paragraph [0039] – paragraph [0058] * * paragraph [0065] – paragraph [0083] * * figures 1-4 * | 1-16 | |
| A | EP 3 291 048 A1 (INTEL IP CORP [US]) 7 March 2018 (2018-03-07) * paragraph [0004] – paragraph [0032] * * paragraph [0087] – paragraph [0096] * * figures 1-12 * | 1-16 | |

TECHNICAL FIELDS SEARCHED (IPC)

G06F

The present search report has been drawn up for all claims

| Place of search | Date of completion of the search | Examiner |
|---|---|---|
| Munich | 18 February 2022 | Pinilla-Ariza, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 19 7574

This annex lists the patent family members relating to the patent documents cited in the above-mentioned European search report.
The members are as contained in the European Patent Office EDP file on
The European Patent Office is in no way liable for these particulars which are merely given for the purpose of information.

18-02-2022

| Patent document cited in search report | | Publication date | Patent family member(s) | | Publication date |
|---|---|---|---|---|---|
| US 2014277815 | A1 | 18-09-2014 | US | 2014277815 A1 | 18-09-2014 |
| | | | WO | 2014151323 A1 | 25-09-2014 |
| US 2015346798 | A1 | 03-12-2015 | NONE | | |
| EP 3291048 | A1 | 07-03-2018 | EP | 3291048 A1 | 07-03-2018 |
| | | | WO | 2018041530 A2 | 08-03-2018 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. PAGANI et al.** TSP: Thermal safe power: Efficient power budgeting for many-core systems in dark silicon. *CODES+ISSS,* 2014, 1-10

- **W. HUANG et al.** Hotspot: A compact thermal modeling methodology for early-stage VLSI design. *IEEE Transactions on very large scale integration (VLSI) systems,* 2006, vol. 14 (5), 501-513